(19) 

Europäisches
Patentamt

European
Patent Office

Office européen
des brevets

(11) **EP 4 466 558 B1**

(12) **EUROPEAN PATENT SPECIFICATION**

(45) Date of publication and mention
of the grant of the patent:
**19.11.2025 Bulletin 2025/47**

(21) Application number: **23705061.2**

(22) Date of filing: **18.01.2023**

(51) International Patent Classification (IPC):
*G01T 1/24* *(2006.01)*        *G01T 3/08* *(2006.01)*

(52) Cooperative Patent Classification (CPC):
**G01T 1/245; G01T 3/08**

(86) International application number:
**PCT/IB2023/050417**

(87) International publication number:
**WO 2023/139489 (27.07.2023 Gazette 2023/30)**

(54) **A METHOD FOR MEASURING HADRON FLUENCE WITH A FIELD PROGRAMMABLE GATE ARRAY (FPGA) AND A FIELD PROGRAMMABLE GATE ARRAY**

VERFAHREN ZUR MESSUNG DER HADRONFLUENZ MIT EINEM FELDPROGRAMMIERBAREN GATE-ARRAY (FPGA) UND EIN FELDPROGRAMMIERBARES GATE-ARRAY

PROCÉDÉ DE MESURE DE FLUENCE HADRONIQUE AU MOYEN D'UN RÉSEAU PRÉDIFFUSÉ PROGRAMMABLE PAR L'UTILISATEUR (FPGA) ET UN RÉSEAU PRÉDIFFUSÉ PROGRAMMABLE PAR L'UTILISATEUR (FPGA)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **19.01.2022  IT 202200000833**

(43) Date of publication of application:
**27.11.2024  Bulletin 2024/48**

(73) Proprietors:
  • **Istituto Nazionale di Fisica Nucleare**
    **00044 Frascati (RM) (IT)**
  • **Institute Jozef Stefan**
    **1000 Ljubljana (SI)**

(72) Inventors:
  • **GIORDANO, Raffaele**
    **80014 GIUGLIANO IN CAMPANIA (Napoli) (IT)**
  • **LOFFREDO, Filomena**
    **80126 NAPOLI (IT)**
  • **MANTI, Lorenzo**
    **81020 CAPODRISE (Caserta) (IT)**
  • **QUARTO, Maria**
    **81031 AVERSA (Caserta) (IT)**
  • **SALVATORE, Marcella**
    **80125 NAPOLI (IT)**

  • **PESTOTNIK, Rok**
    **1000 LJUBLJANA (SI)**
  • **LOZAR, Andrej**
    **5292 RENCE (SI)**
  • **SELJAK, Andrej**
    **5000 NOVA GORICA (SI)**

(74) Representative: **Metroconsult Srl**
    **Foro Bonaparte 51**
    **20121 Milano (IT)**

(56) References cited:
    **WO-A1-2021/002470**

  • **MASI A ET AL: "The New Generation of the CERN Accelerator Radiation Monitoring System for Electronics", IEEE TRANSACTIONS ON NUCLEAR SCIENCE, IEEE, USA, vol. 60, no. 5, 1 October 2013 (2013-10-01), pages 3475 - 3482, XP011528996, ISSN: 0018-9499, [retrieved on 20131009], DOI: 10.1109/TNS.2013.2280079**

**(Cont. next page)**

• DANZECA S ET AL: "Qualification and Characterization of SRAM Memories Used as Radiation Sensors in the LHC", IEEE TRANSACTIONS ON NUCLEAR SCIENCE, IEEE, USA, vol. 61, no. 6, 1 December 2014 (2014-12-01), pages 3458 - 3465, XP011567513, ISSN: 0018-9499, [retrieved on 20141211], DOI: 10.1109/TNS.2014.2365042
• TARRILLO JIMMY ET AL: "Neutron Cross-Section of N-Modular Redundancy Technique in SRAM-Based FPGAs", IEEE TRANSACTIONS ON NUCLEAR SCIENCE, IEEE, USA, vol. 61, no. 4, 1 August 2014 (2014-08-01), pages 1558 - 1566, XP011556405, ISSN: 0018-9499, [retrieved on 20140814], DOI: 10.1109/TNS.2014.2343259

• BLACKMORE EWART ET AL: "SRAM Dosimeter for Characterizing the TRIUMF Proton and Neutron Beams", IEEE TRANSACTIONS ON NUCLEAR SCIENCE, IEEE, USA, vol. 66, no. 1, 1 January 2019 (2019-01-01), pages 276 - 281, XP011706170, ISSN: 0018-9499, [retrieved on 20190118], DOI: 10.1109/TNS.2018.2884148
• ALOISIO A ET AL: "Layout and radiation tolerance issues in high-speed links for TDAQ systems", 2014 19TH IEEE-NPSS REAL TIME CONFERENCE, IEEE, 26 May 2014 (2014-05-26), pages 1 - 2, XP032771224, DOI: 10.1109/RTC.2014.7097548

## Description

The present invention relates in general to techniques for measuring the fluence of thermal neutrons and high energy hadrons (HEH).

It is known that thermal neutrons and hadrons (e.g. neutrons, protons, pions) with a kinetic energy higher than a few MeV may induce single event upsets (SEUs) in static random access memories (SRAMs) via indirect ionization. The hadronic fluence ($\Phi$) is proportional to the number of SEUs ($N_{SEU}$) via the equation

$$\Phi = \frac{N_{SEU}}{\sigma N_{bits}}, \tag{1}$$

where $\sigma$ is the cross-section of the device per bit and $N_{bits}$ is the memory size in bits. It is important to specify that SEU refers to the single physical event that generates the alteration of the logic state of one or more bits in memory. In fact, it is possible to observe SEU from single bit (single bit upset, SBU) or from multiple bit (multiple bit upset, MBU).

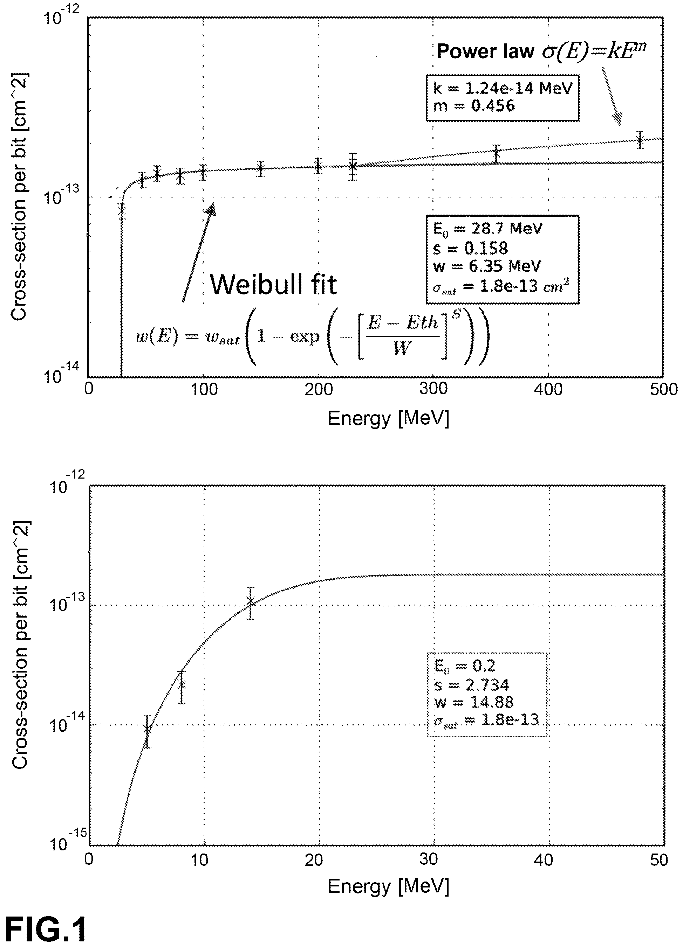

The cross-section depends on the device, the manufacturing technology, the supply voltage, the type and energy of the hadrons. Since SRAMs are not produced for use as fluence meters, this information is not provided by the manufacturers, but must be extracted with test campaigns in irradiation facilities (R. Harboe-Sorensen et al, "Design, testing and calibration of a 'Reference SEU monitor' system", in Proc. RADECS, Sep. 2005, pp. B3-1-B3-7; R. Harboe-Sorensen et al, "From the reference seu monitor to the technology demonstration module onboard PROBA-II," IEEE Trans. Nucl. Sci, vol. 55, no. 6, pp. 3082-3087, Dec. 2008). Some SRAM-based hadron fluence monitors are in use at CERN for the protection of the electronic systems of the Large Hadron Collider (S. Danzeca et al, IEEE Trans. On Nucl. Sci., vol. 61, no. 6, pp. 3458-3465, Dec. 2014). In this context, Cypress SRAMs irradiated with protons and neutrons have been characterized, showing a cross-section of the order of $10^{-13}$ cm$^2$ at energies higher than 50 MeV for protons and higher than 20 MeV for neutrons (Figure 1). Taking into account the memory size (8 Mb) and the cross-section, the sensitivity of the device $[(\sigma N_{bits})^{-1}]$ turned out to be $1.25 \cdot 10^6$ pp/cm$^2$ (where pp indicates hadrons). Recently, hadron counters in proton therapy have been proposed for the characterization of the fast neutron field in the phantom (K. S. Ytre-Hauge et al., "First application of a novel SRAM-based neutron detector for proton therapy", Radiation Measurements, Volume 122 , 2019, Pages 45-52).

Radiation-tolerant readout electronics is required to allow the reading of the response provided by the SRAMs; in this regard, solutions based on discrete components and application-specific integrated circuits (ASICs) have been implemented. Programmable devices, such as Field Programmable Gate Arrays (FPGAs) or central processing units (CPUs), have traditionally been excluded for such an application due to their sensitivity to radiation. Over the past few years, flash-based FPGAs for SRAM reading have been proposed at CERN (S. Danzeca. "The new version of the Radiation Monitor system for the electronics at the CERN electronic components radiation hardness assurance and sensors qualification." pp. 37-38. Electronics. Université Montpellier, 2015) and in proton therapy (K. S. Ytre-Hauge et al, Design and characterization of an SRAM-based neutron detector for particle therapy, NIMA, vol. 804, 2015, pp 64-71). However, such components may limit the lifetime of radiation monitors due to their relatively low total ionization dose (TID) tolerance (J. M. Armani et al, "TID Response of Various Field Programmable Gate Arrays and Memory Devices," 15th European Conference on Radiation and Its Effects on Components and Systems (RADECS), Moscow, 2015, pp. 1-4). A method for measuring hadron fluence is known from MASI A ET AL: "The New Generation of the CERN Accelerator Radiation Monitoring System for Electronics",IEEE TRANSACTIONS ON NUCLEAR SCIENCE, IEEE, USA, vol. 60, no. 5, 1 October 2013 (2013-10-01), pages 3475-3482,ISSN: 0018-9499, DOI: 10.1109/TNS.2013.2280079.

A limitation of prior art solutions is that they require separate components to detect SEUs and to read them, increasing power consumption, board complexity and board size. Furthermore, due to radiation tolerance requirements, the read-out logic is usually fixed and may not be reconfigured or updated once the system has been implemented.

One object of this invention is to provide a solution capable of at least partially resolving the prior art drawbacks.

In view of the aforementioned object, the object of the invention is a method for measuring hadron fluence with a Field Programmable Gate Array - FPGA according to claim 1, wherein the FPGA comprises:

- a Static Random Access Memory - SRAM - based configuration memory;
- a programmable fabric comprising logic blocks, interconnections and input/output - I/O blocks;
- at least one access port to the SRAM-based configuration memory;
- a read-out logic realized in the programmable fabric, and whose functionality depends on data stored in the SRAM-based configuration memory, said read-out logic being capable of accessing the SRAM-based configuration memory through said at least one access port;

    wherein the SRAM-based configuration memory is susceptible of single event upsets induced by hadrons through indirect ionization, the SEU cross-section of the SRAM-based configuration memory having been preliminarily determined for at least one given particle in an energy range of interest and in a power supply voltage range of the FPGA;

wherein the read-out logic is configured to:

- scan at least one subset of the SRAM-based configuration memory in order to verify whether the SRAM-based configuration memory remains in a predetermined logic state; and
- if the read-out logic detects that said at least one subset of the SRAM-based configuration memory differs from the predetermined state,

  i) provide, through the I/O blocks, a time stamp of the detection of the difference, and therefore of the associated SEU, as well as for each detection an identification of each altered bit and of the relevant detected logic state, and
  ii) for each detection, restore the predetermined state in the SRAM-based configuration memory;

wherein the read-out logic is protected by means of at least one radiation-hardening-by-design technique at architecture level, at logic place-and-route level or at configuration level, said at least one radiation-hardening-by-design technique comprising at least one technique selected from the group consisting of: triple modular redundancy, reliability-driven place-and-route constraints, redundant configuration access ports, background refresh of essential configuration bits, protection through cyclic redundancy check of at least part of the content of the SRAM-based configuration memory;
wherein the method comprises:
determining the hadron fluence as a function of said cross-section and of the count of SEUs in the SRAM-based configuration memory.

Furthermore, the invention relates to a Field Programmable Gate Array - FPGA according to claim 6 comprising:

- a Static Random Access Memory - SRAM - based configuration memory;
- a programmable fabric comprising logic blocks, interconnections and input/output - I/O blocks;
- at least one access port to the SRAM-based configuration memory;
- a read-out logic realized in the programmable fabric, and whose functionality depends on data stored in the SRAM-based configuration memory, said read-out logic being capable of accessing the SRAM-based configuration memory through said at least one access port;

wherein the SRAM-based configuration memory is susceptible of SEUs induced by hadrons through indirect ionization, the SEU cross-section of the SRAM-based configuration memory having been preliminarily determined for at least one given particle in an energy range of interest and at least in one power supply voltage range of the FPGA;
wherein the read-out logic is configured to:

- scan at least one subset of the SRAM-based configuration memory in order to verify whether said at least one subset of the SRAM-based configuration memory remains in a predetermined logic state; and
- if the read-out logic detects that said at least one subset of the SRAM-based configuration memory differs from the predetermined state,

  i) provide, through the I/O blocks, a time stamp of the detection of the difference, and therefore of the associated SEU, and for each detection an identification of each altered bit and of the relevant detected logic state, and
  ii) for each detection, restore the predetermined state in the SRAM-based configuration memory;

  wherein the read-out logic is protected by means of at least one radiation-hardening-by-design technique at architecture level, at logic place-and-route level or at configuration level, said at least one radiation-hardening-by-design technique comprising at least one technique selected from the group consisting of: triple modular redundancy, reliability-driven place-and-route constraints, redundant configuration access ports, background refresh of essential configuration bits, protection through cyclic redundancy check of at least part of the content of the SRAM-based configuration memory;
  wherein the read-out logic is configured to determine the hadron fluence as a function of said cross-section and of the count of SEUs in the SRAM-based configuration memory, or the FPGA is connectable to an external system configured to determine the hadron fluence as a function of said cross-section and of the count of SEUs in the SRAM-based configuration memory.

According to the invention, the FPGA implements both the sensing element (the SRAM-based configuration memory, otherwise called CRAM) and the read-out logic (the firmware in the fabric).
Due to the architecture of FPGAs, SEUs in the CRAM may corrupt programmed elements, including interconnections, thus preventing the read-out logic from functioning properly. The reading firmware in the fabric must be robust against SEUs and single event transients.

To achieve this, it is possible to protect the read-out logic by means of radiation-hardening-by-design techniques at architecture level and by placing and interconnecting the logic, different techniques which are per se known. To convert the SEU count into fluence, the CRAM cross-section must be characterized as a function of energy and supply voltage by means of dedicated measurements at irradiation sites. Some neutron-specific characterization methods are shown in CN 108169660 A, which describes a method for determining the sensitivity of an FPGA to single particle effects induced by atmospheric neutrons, and in CN 105590653 A, which describes a test method for neutron-induced single-particle effects on a SRAM-based FPGA.

The features and advantages of the method and of the sensor according to the invention will become clearer from the following detailed description, made in reference to the accompanying drawings, provided purely for illustrative and non-limiting purposes, wherein:

- Fig. 1 shows the cross-sections per bit as a function of energy for the Cypress CY62157EV30 8Mb SRAM. In the left graph, proton cross-section data are fitted with a Weibull function and with a Weibull sum + power law (source: S. Danzeca et al, IEEE Trans. On Nucl. Sci., vol. 61, no. 6, pp. 3458-3465, Dec. 2014). In the right graph, neutron cross-section data are fitted with a Weibull function;
- Fig. 2 is the perspective representation of an FPGA hit by a hadron;
- Fig. 3 conceptually shows the fabric, the CRAM and the access port to the CRAM of the FPGA of Fig. 1;
- Fig. 4 is a conceptual diagram of the fabric of the device of Fig. 2 (source: https://www.ni.com/it-it/in novations/white-papers/08/fpga-fundamentals. html);
- Fig. 5 illustrates examples of single event upsets in the CRAM that modify the logic and routing of signals in the fabric in an FPGA (source: https://api.seman ticscholar.org/CorpusID:55267460);

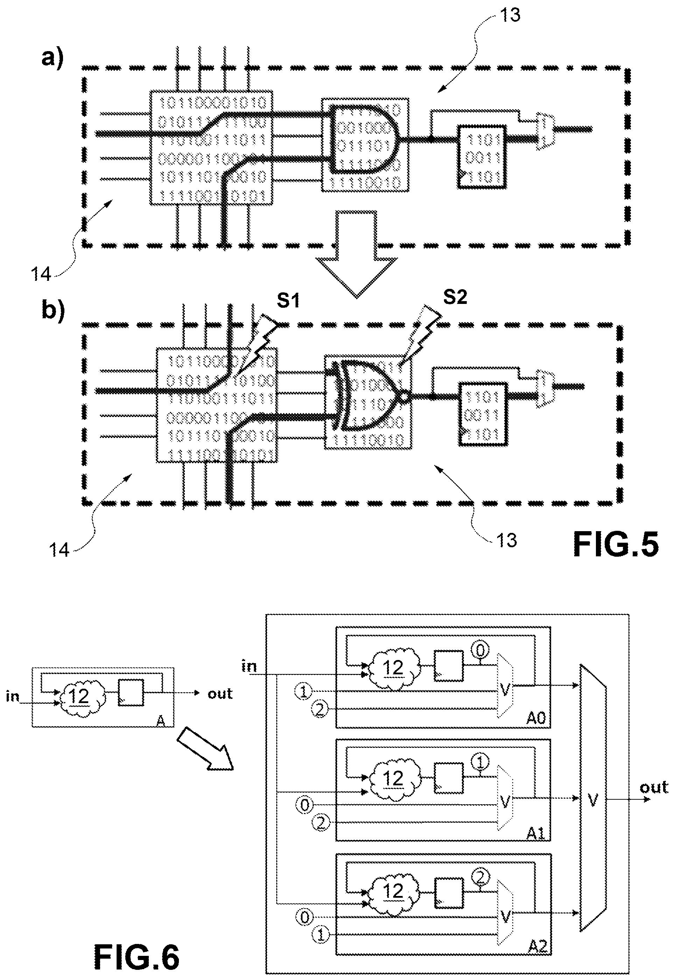

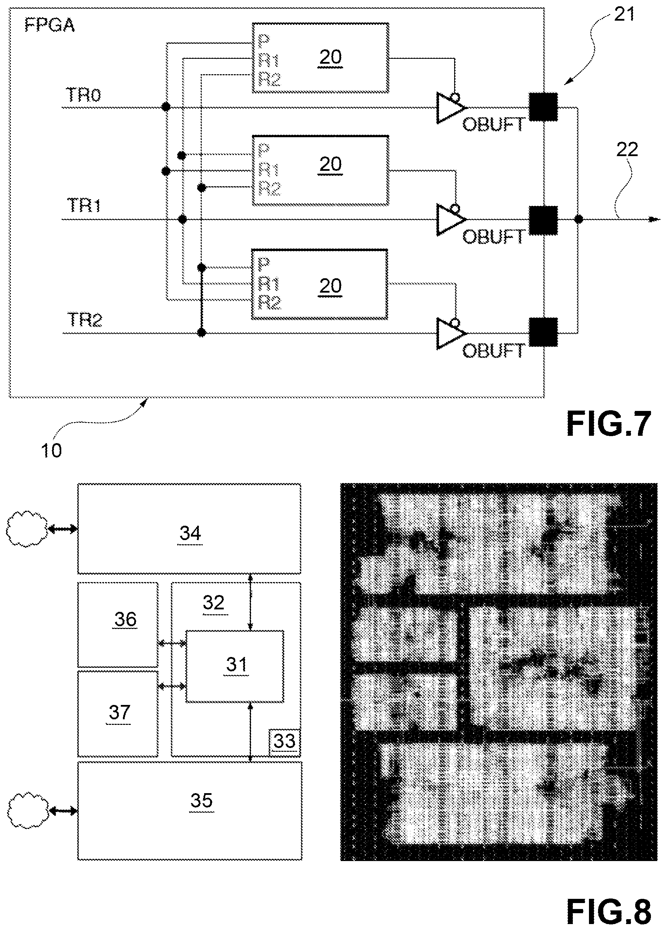

- Fig. 6 to 8 are diagrams representing different methodologies for minimizing single points of failure within the FPGA. In particular, Fig. 6 represents an example of modular redundancy applied at the fabric level (source: R. Giordano et al "Configuration Self-Repair in Xilinx FPGAs" IEEE Trans. On Nucl. Sci., Vol. 65, no.106, Oct. 2018), Fig. 7 represents an example of modular redundancy applied at the level of the printed circuit (source: Triple Module Redundancy Design Techniques for Virtex FPGAs, XAPP197 (v1.0.1) July 6, 2006), and Fig. 8 represents the Xilinx(R) Isolation Design Flow methodology (source: Isolation Design Flow for Xilinx 7 Series FPGAs or Zynq-7000 AP SoCs (ISE Tools), XAPP1086 (v1.3.1), Xilinx Inc., February 5, 2015).

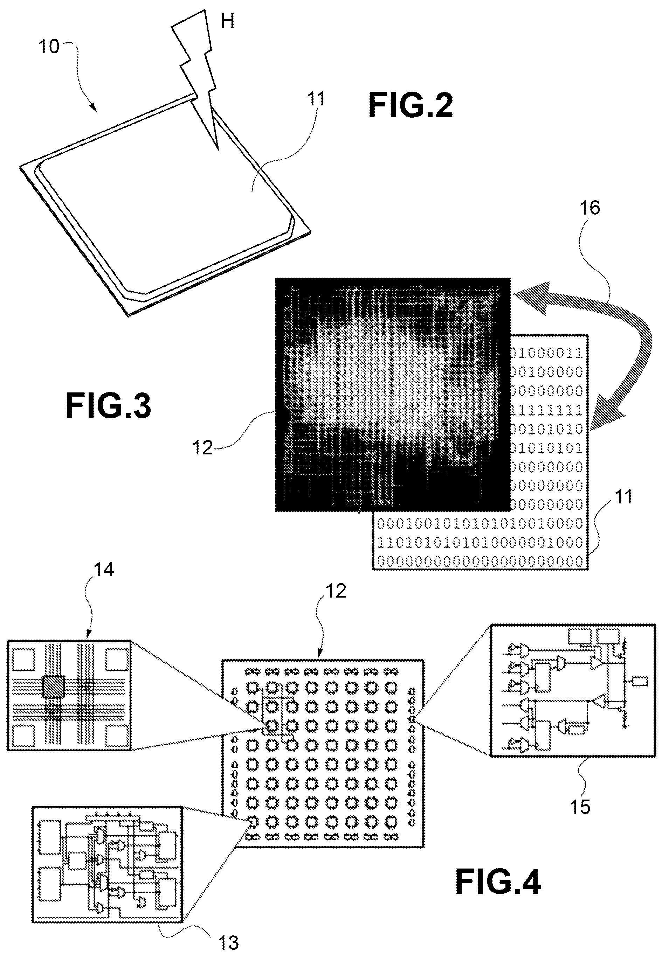

With reference to Fig. 2 to 4, a Field Programmable Gate Array (FPGA) is shown, indicated as a whole with reference numeral 10. The FPGA 10 is of the type comprising a configuration memory based on Static Random Access Memory (SRAM), indicated with reference numeral 11 (hereinafter also indicated as CRAM). Fig. 2 symbolically represents a hadron, indicated with H, which impinges on the FPGA 10.

The FPGA 10 further comprises a programmable fabric 12, conventionally comprising logic blocks 13, interconnections 14 and input/output (I/O) blocks 15.

The FPGA 10 further comprises at least one access gate, represented by the arrow 16 in Fig. 3 and configured to allow access to the SRAM-based configuration memory 11.

The FPGA 10 further comprises a read-out logic implemented in the programmable fabric 12; this read-out logic is able to access the SRAM-based configuration memory 11 through the access port 16.

The SRAM-based configuration memory also acts as a sensing element to allow the determination of hadron fluence as a function of the number of SEUs in the CRAM 11. To convert the SEU count into fluence, the CRAM cross-section must be characterized as a function of energy and supply voltage by means of dedicated measurements at irradiation sites.

At the same time, the read-out logic is configured to detect and correct the altered bits in the CRAM 11 and in the fabric 12, implementing a self-correction function of the configuration and of the read-out logic itself. Information on the SEUs detected is transmitted to an external system (not shown) which determines the hadron fluence as a function of said cross-section and the number of SEUs in the CRAM 11.

More specifically, the read-out logic is configured to scan at least one subset of the CRAM 11 to verify if the CRAM 11 remains in a predetermined logic state.

If the read-out logic detects that this subset of the CRAM 11 differs from the pre-established state, it provides, through the I/O blocks 15, a time stamp of the detection of the difference, and therefore of the associated SEU, and for each detection an identification of each altered bit and of the relevant detected logic state, and for each detection, restores the predetermined state in the CRAM 11. An example of a configuration self-correction procedure is described in R. Giordano et al, "Configuration Self-Repair in Xilinx(R) FPGAs" IEEE Trans. On Nucl. Sci., Vol. 65, no.106, Oct. 2018.

The ways used to determine the expected state of the configuration memory 11, using only the FPGA and therefore without using external memories, are per se known. Some examples are given below:

1) verifying that the configuration not belonging to the read-out logic remains at its default value;
2) making the configuration memory bits redundant, as described in WO 2019/138282 A1, and performing a majority vote of their logic state;
3) compressing and storing the pre-established configuration in configuration bits related to unused resources (for example in block RAM available in the fabric).

As indicated above, the reading firmware in the fabric 12 must be robust against SEUs and single event transients. In fact, radiation induces SEUs that alter the logic and routing of the signals, as illustrated in the example of Fig. 5. Box a) represents an interconnection block 14 and a logic block 13 in their original logic state, while box b) represents the same blocks in which multiple bits have been altered by two SEU events (indicated by S1 and S2) induced from radiation, changing the behavior of the system.

The read-out logic is therefore protected by techniques for hardening against radiation at the architectural level, such as triple modular redundancy, and at the logic placement and interconnection level, for example by using placement and interconnection constraints based on reliability (A. Aloisio et al, "Layout and Radiation Tolerance Issues in High-Speed Links" IEEE Trans. On Nucl. Sci., Vol. 62, no. 6, Dec. 2015; L. Sterpone et al, "A new reliability-oriented place and route algorithm for SRAM-based FPGAs" IEEE Trans. Comput. vol. 55 no. 6 pp. 732-744 Jun. 2006). Fig. 6 and 7 show examples of triple modular redundancy applied in the fabric 12 of the FPGA (Fig. 6) and on the printed circuit board hosting the FPGA (Fig. 7). Reference numeral 20 in Fig. 7 designates minority voting circuits, while reference numeral 21 designates pins of FPGA 10. The outputs of the FPGA are routed, at 22, to the printed circuit which houses such device. Fig. 8 represents the Xilinx(R) Isolation Design Flow methodology for limiting the propagation of faults between different modules built into the fabric of the same FPGA. In Fig. 8, reference numeral 31 designates a microprocessor, reference numeral 32 designates an isolated control function, reference numeral 33 designates an SEU sensing function, reference numerals 34 and 35 designate two isolated functions, reference numeral 36 designates a critical function for safety, and reference numeral 37 designates a redundant safety-critical function.

Other techniques consist, for example, in the adoption of redundant configuration access ports for device self-repair, or in the background refresh of the essential configuration bits (i.e. the bits which, if altered, potentially induce a malfunction of the particular circuit implemented in the fabric). It is also possible to protect at least part of the contents of the CRAM through a cyclic redundancy check (CN 104484238 A).

According to an alternative embodiment, the read-out logic may also be totally self-contained, perform reconstruction of each SEU event with associated bad bit identification, store a SEU count, and even use the SEU count for on-chip fluence conversion via predefined look-up tables, without requiring any external fluence determination system.

According to one embodiment, it is possible to include boron in the fabrication of the FPGA to increase the sensitivity to thermal neutrons, and in principle it may be possible to add boron to the surface of the device after manufacturing. Through appropriate fault-injection measurements performed with pulsed lasers (e.g. V. Pouget et al., "Dynamic Testing of an SRAM-Based FPGA by Time-Resolved Laser Fault Injection," 2008 14th IEEE International On-Line Testing Symposium, 2008, pp. 295-301, doi: 10.1109/IOLTS.2008.39) it is possible to associate the logical position of the bits in the CRAM with the physical position on the silicon die. This would allow the device to also be used to obtain some geometric information on the secondary particles, and therefore indirectly on the primary particle in order to create images of an object of interest irradiated with hadrons. A sensor for neutron, proton or pion imaging would then be made, depending on the primary particles used. More generally, for the purposes of the present invention it is meant that the expression "determining the hadron fluence" also includes the determination of a hadron fluence distribution as a function of the physical position on the die of the single cells of the SRAM-based configuration memory 11 of the FPGAs 10.

The solution described above allows the development of compact, reprogrammable, low power dissipation thermal neutron and high energy hadron (HEH) fluence sensors with integrated reading electronics with the following features:

- single device as sensing element and read-out electronics;
- reprogrammable read-out logic and interface configurable to back-end systems;
- compact board (area 30 $cm^2$);
- digital serial output (e.g. according to one of the following protocols JTAG, UART, SPI, I2C, CAN);
- low power (<1 W per sensor);
- reduced cost by using commercial off-the-shelf (COTS) components.

As regards performance in terms of fluence sensitivity and radiation tolerance, the sensors are expected to be competitive with those of the prior art. The estimated figures, based on literature data from irradiation tests of Xilinx(R) 7-Series FPGAs, are as follows:

- sensitivity of the order of $10^6$ pp/$cm^2$ or higher (where pp indicates hadrons);
- radiation tolerance (TID > 1 kGy, 1 MeV equivalent neutron fluence > $10^{12}$ n/$cm^2$, HEH fluence > $10^{12}$ pp/$cm^2$).

**Claims**

1. A method for measuring hadron fluence with a Field Programmable Gate Array - FPGA (10), wherein the FPGA (10) comprises:

- a Static Random Access Memory - SRAM - based configuration memory (11);
- a programmable fabric (12) comprising logic blocks (13), interconnections (14) and input/output - I/O blocks (15);
- at least one access port (16) to the SRAM-based configuration memory (11);
- a read-out logic realized in the programmable fabric (12), and whose functionality depends on data stored in the SRAM-based configuration memory (11), said read-out logic being capable of accessing the SRAM-based configuration memory (11) through said at least one access port (16);

wherein the SRAM-based configuration memory (11) is susceptible of single event upsets - SEUs induced by hadrons through indirect ionization, the SEU cross-section of the SRAM-based configuration memory (11) having been preliminarily determined for at least one given particle in an energy range of interest and in at least one power supply voltage range of the FPGA (10); wherein the read-out logic is configured to:

a) scan at least one subset of the SRAM-based configuration memory (11) in order to verify whether said at least one subset of the SRAM-based configuration memory (11) remains in a predetermined logic state; and
b) if the read-out logic detects that said at least one subset of the SRAM-based configuration memory (11) differs from the predetermined state,

i) provide, through the I/O blocks (15), a time stamp of the detection of the difference, and, therefore of the associated SEU, and for each detection an identification of each altered bit and of the respective detected logic state, and
ii) for each detection, restore the predetermined state in the SRAM-based configuration memory (11);

wherein the read-out logic is protected by means of at least one radiation-hardening-by-design technique at architecture level, at logic place-and-route level or at configuration level, said at least one radiation-hardening-by-design technique comprising at least one technique selected from the group consisting of: triple modular redundancy, reliability-driven place-and-route constraints, redundant configuration access ports, background refresh of essential configuration bits, protection through cyclic redundancy check of at least part of the content of the SRAM-based configuration memory;
wherein the method comprises:
determining the hadron fluence as a function of said cross-section and of the count of SEUs in the SRAM-based configuration memory (11).

2. The method of claim 1, wherein the step a) comprises
performing a majority voting of the logic state of configuration memory bits made redundant in order to verify their stay in a predetermined logic state.

3. The method of any of the preceding claims, wherein in step a) a predetermined configuration, compressed and stored in configuration memory bits pertaining to unused resources of the programmable fabric (12), is used.

4. The method of any of the preceding claims, wherein said hadrons are protons, neutrons or pions.

5. The method of any of the preceding claims, wherein the logic position of bits in the SRAM-based configuration memory (11) of the FPGA (10) has been preliminarily associated to their physical position on the silicon die, the method further comprising using multiple identifications of the altered bits, associated to multiple SEU, to build an overall image of an object of interest irradiated with hadrons.

6. A Field Programmable Gate Array - FPGA (10) comprising:

- a Static Random Access Memory - SRAM - based configuration memory (11);
- a programmable fabric (12) comprising logic blocks (13), interconnections (14) and input/output - I/O blocks (15);
- at least one access port (16) to the SRAM-based configuration memory (11);
- a read-out logic realized in the programmable fabric (12), and whose functionality depends on data stored in the SRAM-based configuration memory (11), said read-out logic being capable of accessing the SRAM-based configuration memory (11) through said at least one access port (16);

wherein the SRAM-based configuration memory (11) is susceptible of single event upsets - SEUs induced by hadrons through indirect ionization, the SEU cross-section of the SRAM-based configuration memory (11) having been preliminarily determined for at least one given particle in an energy range of interest and in at least one power supply voltage range of the FPGA (10); wherein the read-out logic is configured to:

a) scan at least one subset of the SRAM-based configuration memory (11) in order to verify whether said at least one subset of the SRAM-based configuration memory (11) remains in a predetermined logic state; and

b) if the read-out logic detects that said at least one subset of the SRAM-based configuration memory (11) differs from the predetermined state,

i) provide, through the I/O blocks (15), a time stamp of the detection of the difference, and, therefore of the associated SEU, and for each detection an identification of each altered bit and of the respective detected logic state, and

ii) for each detection, restore the predetermined state in the SRAM-based configuration memory (11);

wherein the read-out logic is protected by means of at least one radiation-hardening-by-design technique at architecture level, at logic place-and-route level or at configuration level, said at least one radiation-hardening-by-design technique comprising at least one technique selected from the group consisting of: triple modular redundancy, reliability-driven place-and-route constraints, redundant configuration access ports, background refresh of essential configuration bits, protection through cyclic redundancy check of at least part of the content of the SRAM-based configuration memory;

wherein the read-out logic is configured to determine the hadron fluence as a function of said cross-section and of the count of SEUs in the SRAM-based configuration memory (11), or the FPGA (10) is connectable to an external system configured to determine the hadron fluence as a function of said cross-section and of the count of SEUs in the SRAM-based configuration memory (11).

7. The FPGA of claim 6, wherein the FPGA (10) contains boron or comprises a surface layer containing boron.

**Patentansprüche**

1. Verfahren zur Messung der Hadronen-Fluenz mit einem feldprogrammierbaren Gate-Array bzw. FPGA (10), wobei das FPGA (10) umfasst:

- einen Konfigurationsspeicher (11) auf Grundlage eines statischen wahlfreien Zugriffsspeichers bzw. SRAM;
- eine programmierbare Struktur (12), die Logikblöcke (13), Verbindungen (14) und Eingabe/Ausgabe-Blöcke bzw. E/A-Blöcke (15) umfasst;
- zumindest einen Zugriffsport (16) auf den Konfigurationsspeicher (11) auf SRAM-Basis;
- eine Ausleselogik, die in der programmierbaren Struktur (12) realisiert ist und deren Funktionalität von Daten abhängt, die in dem Konfigurationsspeicher (11) auf SRAM-Basis gespeichert sind, wobei die Ausleselogik in der Lage ist, auf den Konfigurationsspeicher (11) auf SRAM-Basis über den zumindest einen Zugriffsanschluss (16) zuzugreifen;

wobei der Konfigurationsspeicher (11) auf SRAM-Basis für Single Event Upsets bzw. SEUs empfänglich ist, die von Hadronen durch indirekte Ionisierung induziert werden, wobei der SEU-Querschnitt des Konfigurationsspeichers (11) auf SRAM-Basis im Voraus für zumindest ein gegebenes Teilchen in einem Energiebereich von Interesse und in zumindest einem Stromversorgungs-Spannungsbereich des FPGA (10) bestimmt worden ist;

wobei die Ausleselogik dazu ausgestaltet ist:

a) zumindest eine Teilmenge des Konfigurationsspeichers (11) auf SRAM-Basis abzutasten, um zu überprüfen, ob die zumindest eine Teilmenge des Konfigurationsspeichers (11) auf SRAM-Basis in einem vorbestimmten logischen Zustand bleibt; und

b) wenn die Ausleselogik erkennt, dass die zumindest eine Teilmenge des Konfigurationsspeichers (11) auf SRAM-Basis (11) von dem vorbestimmten Zustand abweicht,

i) über die E/A-Blöcke (15) einen Zeitstempel der Erkennung der Differenz und somit der zugehörigen SEU, und für jede Erkennung eine Identifikation jedes veränderten Bits und des jeweiligen erkannten logischen Zustands bereitzustellen und
ii) für jede Erkennung den vorgegebenen Zustand in dem Konfigurationsspeicher (11) auf SRAM-Basis wiederherzustellen;

wobei die Ausleselogik mittels zumindest einer Radiation-Hardening-By-Design-Technik auf Architekturebene, auf Logik-Place-and-Route-Ebene oder auf Konfigurationsebene geschützt ist, wobei die mindestens eine Radiation-Hardening-By-Design-Technik zumindest eine Technik umfasst, die aus der Gruppe ausgewählt ist, die aus folgenden besteht: dreifache modulare Redundanz, zuverlässigkeitsorientierte Place-and-Route-Beschränkungen, redundante Konfigurations-Zugriffsports, Auffrischung der wichtigsten Konfigurationsbits im Hintergrund, Schutz durch zyklische Redundanzprüfung zumindest eines Teils des Inhalts des Konfigurationsspeichers auf SRAM-Basis;
wobei das Verfahren umfasst:
Bestimmen der Hadronen-Fluenz als eine Funktion des Querschnitts und der Zählung der SEUs in dem Konfigurationsspeicher (11) auf SRAM-Basis.

2. Verfahren nach Anspruch 1, wobei der Schritt a) umfasst:
Durchführung einer Mehrheitsabstimmung über den logischen Zustand der redundant gemachten Bits des Konfigurationsspeichers, um zu überprüfen, ob sie sich in einem vorgegebenen logischen Zustand befinden.

3. Verfahren nach einem der vorhergehenden Ansprüche, wobei in Schritt a) eine vorbestimmte Konfiguration verwendet wird, die komprimiert und in Bits des Konfigurationsspeichers gespeichert ist, die sich auf ungenutzte Ressourcen der programmierbaren Struktur (12) beziehen.

4. Verfahren nach einem der vorhergehenden Ansprüche, wobei die Hadronen Protonen, Neutronen oder Pionen sind.

5. Verfahren nach einem der vorhergehenden Ansprüche, wobei die logische Position von Bits in dem Konfigurationsspeicher (11) auf SRAM-Basis des FPGA (10) im Voraus ihrer physischen Position auf dem Siliziumchip zugeordnet wurde, wobei das Verfahren ferner die Verwendung mehrerer Identifikationen der veränderten Bits umfasst, die mehreren SEUs zugeordnet sind, um ein Gesamtbild eines mit Hadronen bestrahlten Objekts von Interesse aufzubauen.

6. Feldprogrammierbares Gate-Array bzw. FPGA (10), umfassend:

- einen Konfigurationsspeicher (11) auf Grundlage eines statischen wahlfreien Zugriffsspeichers bzw. SRAM;
- eine programmierbare Struktur (12), die Logikblöcke (13), Verbindungen (14) und Eingabe/Ausgabe-Blöcke bzw. E/A-Blöcke (15) umfasst;
- zumindest einen Zugriffsport (16) auf den Konfigurationsspeicher (11) auf SRAM-Basis;
- eine Ausleselogik, die in der programmierbaren Struktur (12) realisiert ist und deren Funktionalität von Daten abhängt, die in dem Konfigurationsspeicher (11) auf SRAM-Basis gespeichert sind, wobei die Ausleselogik in der Lage ist, auf den Konfigurationsspeicher (11) auf SRAM-Basis über den zumindest einen Zugriffsanschluss (16) zuzugreifen;

wobei der Konfigurationsspeicher (11) auf SRAM-Basis für Single Event Upsets bzw. SEUs empfänglich ist, die von Hadronen durch indirekte Ionisierung induziert werden, wobei der SEU-Querschnitt des Konfigurationsspeichers (11) auf SRAM-Basis im Voraus für zumindest ein gegebenes Teilchen in einem Energiebereich von Interesse und in zumindest einem Stromversorgungs-Spannungsbereich des FPGA (10) bestimmt worden ist;
wobei die Ausleselogik dazu ausgestaltet ist:

a) zumindest eine Teilmenge des Konfigurationsspeichers (11) auf SRAM-Basis abzutasten, um zu überprüfen, ob die zumindest eine Teilmenge des Konfigurationsspeichers (11) auf SRAM-Basis in einem vorbestimmten logischen Zustand bleibt; und
b) wenn die Ausleselogik erkennt, dass die zumindest eine Teilmenge des Konfigurationsspeichers (11) auf SRAM-Basis von dem vorbestimmten Zustand abweicht,

i) über die E/A-Blöcke (15) einen Zeitstempel der Erkennung der Differenz und somit der zugehörigen SEU, und für jede Erkennung eine Identifikation jedes veränderten Bits und des jeweiligen erkannten logischen Zustands bereitzustellen und
ii) für jede Erkennung den vorgegebenen Zustand in dem Konfigurationsspeicher (111) auf SRAM-Basis wiederherzustellen;

wobei die Ausleselogik mittels zumindest einer Radiation-Hardening-By-Design-Technik auf Architekturebene, auf Logik-Place-and-Route-Ebene oder auf Konfigurationsebene geschützt ist, wobei die mindestens eine Radiation-Hardening-By-Design-Technik zumindest eine Technik umfasst, die aus der Gruppe ausgewählt ist, die aus folgenden besteht: dreifache modulare Redundanz, zuverlässigkeitsorientierte Place-and-Route-Beschränkungen, redundante Konfigurations-Zugriffsports, Auffrischung der wichtigsten Konfigurationsbits im Hintergrund, Schutz durch zyklische Redundanzprüfung zumindest eines Teils des Inhalts des Konfigurationsspeichers auf SRAM-Basis;

wobei die Ausleselogik dazu ausgestaltet ist, die Hadronen-Fluenz als eine Funktion des Querschnitts und der Zählung der SEUs in dem Konfigurationsspeicher (11) auf SRAM-Basis zu bestimmen, oder das FPGA (10) mit einem externen System verbindbar ist, das dazu ausgestaltet ist, die Hadronen-Fluenz als eine Funktion des Querschnitts und der Zählung der SEUs in dem Konfigurationsspeicher (11) auf SRAM-Basis zu bestimmen.

7. FPGA nach Anspruch 6, wobei das FPGA (10) Bor enthält oder eine Oberflächenschicht umfasst, die Bor enthält.

**Revendications**

1. Procédé de mesure de la fluence hadronique au moyen d'un réseau prédiffusé programmables (FPGA) (10), dans lequel le FPGA (10) comprend :

• une mémoire de configuration (11) à base de mémoire vive statique (SRAM) ;
• une matrice programmable (12) comprenant des blocs logiques (13), des interconnexions (14) et des blocs d'entrée/sortie - E/S blocs (15) ;
• au moins un port d'accès (16) à la mémoire de configuration (11) à base de SRAM ;
• une logique de lecture réalisée dans la matrice programmable (12) et dont la fonctionnalité dépend des données stockées dans la mémoire de configuration (11) à base de SRAM, ladite logique de lecture étant capable d'accéder à la mémoire de configuration (11) à base de SRAM par l'intermédiaire dudit au moins un port d'accès (16) ;

dans laquelle la mémoire de configuration (11) à base de SRAM est susceptible de subir des perturbations d'événements uniques - SEU - induites par des hadrons par ionisation indirecte, la section transversale SEU de la mémoire de configuration à base de SRAM (11) ayant été déterminée au préalable pour au moins une particule donnée dans une plage d'énergie d'intérêt et dans au moins une plage de tension d'alimentation du FPGA (10) ; dans lequel la logique de lecture est configurée pour :

a) balayer au moins un sous-ensemble de la mémoire de configuration à base de SRAM (11) afin de vérifier si ledit au moins un sous-ensemble de la mémoire de configuration à base de SRAM (11) reste dans un état logique prédéterminé ; et
b) si la logique de lecture détecte que ledit au moins un sous-ensemble de la mémoire de configuration à base de SRAM (11) diffère de l'état prédéterminé,

i) fournir, via les blocs d'E/S (15), un horodatage de la détection de la différence, et donc du SEU associé, et pour chaque détection une identification de chaque bit altéré et de l'état logique détecté respectif, et
ii) pour chaque détection, restaurer l'état prédéterminé dans la mémoire de configuration à base de SRAM (11) ;

dans lequel la logique de lecture étant protégée au moyen d'au moins une technique de renforcement des radiations par conception au niveau de l'architecture, au niveau du placement et du routage logiques ou au niveau de la configuration, ladite au moins une technique de renforcement des radiations par conception comprenant au moins une technique sélectionnée dans le groupe constitué par : une redondance modulaire triple, des contraintes de placement et de routage basées sur la fiabilité, des ports d'accès de configuration redondants, actualisation en arrière-plan des bits de configuration essentiels, une protection par contrôle de redondance cyclique d'au moins une partie du contenu de la mémoire de configuration basée sur SRAM ;
dans lequel le procédé comprend :
la détermination de la fluence hadronique en fonction de ladite section transversale et du nombre de SEU dans la mémoire de configuration à base de SRAM (11).

**2.** Procédé selon la revendication 1, dans lequel l'étape a) comprend

la réalisation d'un vote majoritaire de l'état logique de bits de mémoire de configuration rendus redondants afin de vérifier leur maintien dans un état logique prédéterminé.

**3.** Procédé selon l'une quelconque des revendications précédentes, dans lequel, à l'étape a), une configuration prédéterminée, compressée et stockée dans des bits de mémoire de configuration appartenant à des ressources inutilisées de la matrice programmable (12), est utilisée.

**4.** Procédé selon l'une quelconque des revendications précédentes, dans lequel les hadrons sont des protons, des neutrons ou des pions.

**5.** Procédé selon l'une quelconque des revendications précédentes, dans lequel la position logique des bits dans la mémoire de configuration (11) à base de SRAM du FPGA (10) a été préalablement associée à leur position physique sur la puce de silicium, le procédé comprenant en outre

l'utilisation de multiples identifications des bits modifiés, associés à de multiples SEU, pour construire une image globale d'un objet d'intérêt irradié par des hadrons.

**6.** Un réseau prédiffusé programmables sur site (FPGA) (10) comprenant :

• une mémoire de configuration (11) à base de mémoire vive statique (SRAM) ;
• une matrice programmable (12) comprenant des blocs logiques (13), des interconnexions (14) et des blocs d'entrée/sortie - E/S blocs (15) ;
• au moins un port d'accès (16) à la mémoire de configuration (11) à base de SRAM ;
• une logique de lecture réalisée dans la matrice programmable (12) et dont la fonctionnalité dépend des données stockées dans la mémoire de configuration (11) à base de SRAM, ladite logique de lecture étant capable d'accéder à la mémoire de configuration (11) à base de SRAM par l'intermédiaire dudit au moins un port d'accès (16) ;

dans laquelle la mémoire de configuration (11) à base de SRAM est susceptible de subir des perturbations d'événements uniques - SEU - induites par des hadrons par ionisation indirecte, la section transversale SEU de la mémoire de configuration à base de SRAM (11) ayant été déterminée au préalable pour au moins une particule donnée dans une plage d'énergie d'intérêt et dans au moins une plage de tension d'alimentation du FPGA (10) ; dans lequel la logique de lecture est configurée pour :

a) - balayer au moins un sous-ensemble de la mémoire de configuration à base de SRAM (11) afin de vérifier si ledit au moins un sous-ensemble de la mémoire de configuration à base de SRAM (11) reste dans un état logique prédéterminé ; et
b) si la logique de lecture détecte que ledit au moins un sous-ensemble de la mémoire de configuration à base de SRAM (11) diffère de l'état prédéterminé,

i) fournir, via les blocs d'E/S (15), un horodatage de la détection de la différence, et donc du SEU associé, et pour chaque détection une identification de chaque bit altéré et de l'état logique détecté respectif, et
ii) pour chaque détection, restaurer l'état prédéterminé dans la mémoire de configuration à base de SRAM (11) ;

dans lequel la logique de lecture étant protégée au moyen d'au moins une technique de renforcement des radiations par conception au niveau de l'architecture, au niveau du placement et du routage logiques ou au niveau de la configuration, ladite au moins une technique de renforcement des radiations par conception comprenant au moins une technique sélectionnée dans le groupe constitué par : une redondance modulaire triple, des contraintes de placement et de routage basées sur la fiabilité, des ports d'accès de configuration redondants, actualisation en arrière-plan des bits de configuration essentiels, une protection par contrôle de redondance cyclique d'au moins une partie du contenu de la mémoire de configuration basée sur SRAM ;
dans lequel la logique de lecture est configurée pour déterminer la fluence des hadrons en fonction de ladite section transversale et du nombre de SEU dans la mémoire de configuration à base de SRAM (11), ou le FPGA (10) peut être connecté à un système externe configuré pour déterminer la fluence hadronique en fonction de ladite section transversale et du nombre de SEU dans la mémoire de configuration à base de SRAM (11).

**7.** Le FPGA selon la revendication 6, dans lequel le FPGA (10) contient du bore ou comprend une couche superficielle contenant du bore.

**FIG.1**

**FIG.2**

**FIG.3**

**FIG.4**

**FIG.5**

**FIG.6**

FIG.7

FIG.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108169660 A
- CN 105590653 A
- WO 2019138282 A1
- CN 104484238 A

**Non-patent literature cited in the description**

- **R. HARBOE-SORENSEN et al.** Design, testing and calibration of a 'Reference SEU monitor' system. *Proc. RADECS*, September 2005, B3-1, B3-7
- **R. HARBOE-SORENSEN et al.** From the reference seu monitor to the technology demonstration module onboard PROBA-II. *IEEE Trans. Nucl. Sci*, December 2008, vol. 55 (6), 3082-3087
- **S. DANZECA et al.** *IEEE Trans. On Nucl. Sci.*, December 2014, vol. 61 (6), 3458-3465
- **K. S. YTRE-HAUGE et al.** First application of a novel SRAM-based neutron detector for proton therapy. *Radiation Measurements*, 2019, vol. 122, 45-52
- The new version of the Radiation Monitor system for the electronics at the CERN electronic components radiation hardness assurance and sensors qualification.. **S. DANZECA**. Electronics. Université Montpellier, 2015, 37-38
- **K. S. YTRE-HAUGE et al.** Design and characterization of an SRAM-based neutron detector for particle therapy. *NIMA*, 2015, vol. 804, 64-71
- **J. M. ARMANI et al.** TID Response of Various Field Programmable Gate Arrays and Memory Devices. *15th European Conference on Radiation and Its Effects on Components and Systems (RADECS), Moscow*, 2015, 1-4
- The New Generation of the CERN Accelerator Radiation Monitoring System for Electronics. **MASI A et al.** IEEE TRANSACTIONS ON NUCLEAR SCIENCE. IEEE, 01 October 2013, vol. 60, 3475-3482
- **R. GIORDANO et al.** Configuration Self-Repair in Xilinx FPGAs. *IEEE Trans. On Nucl. Sci.*, October 2018, vol. 65 (106)
- *Triple Module Redundancy Design Techniques for Virtex FPGAs, XAPP197 (v1.0.1)*, 06 July 2006
- Isolation Design Flow for Xilinx 7 Series FPGAs or Zynq-7000 AP SoCs (ISE Tools), XAPP1086 (v1.3.1). Xilinx Inc., 05 February 2015
- **R. GIORDANO et al.** Configuration Self-Repair in Xilinx(R) FPGAs. *IEEE Trans. On Nucl. Sci.*, October 2018, vol. 65 (106)
- **A. ALOISIO et al.** Layout and Radiation Tolerance Issues in High-Speed Links. *IEEE Trans. On Nucl. Sci.*, December 2015, vol. 62 (6)
- **L. STERPONE et al.** A new reliability-oriented place and route algorithm for SRAM-based FPGAs. *IEEE Trans. Comput.*, June 2006, vol. 55 (6), 732-744
- **V. POUGET et al.** Dynamic Testing of an SRAM-Based FPGA by Time-Resolved Laser Fault Injection. *2008 14th IEEE International On-Line Testing Symposium*, 2008, 295-301